# EUROPEAN PATENT SPECIFICATION

(11) **EP 0 661 346 B1**
(45) Date of publication and mention of the grant of the patent: **15.09.1999**
(21) Application number: 94119891.3
(22) Date of filing: 15.12.1994
(51) Int. Cl.: C08L 67/04, C08K 3/36, C08K 3/34

(54) **Heat-resistant molded article of lactic acid-base polymer**
Hitzebeständiger geformter Gegenstand auf Basis eines Polymers von Milchsäure
Article moulé résistant à la chaleur à base d'un polymère d'acide lactique

(30) Priority: 24.12.1993 JP 32785893
(43) Date of publication of application: 05.07.1995
(73) Proprietor: MITSUI CHEMICALS, INC., Tokyo (JP)
(72) Inventor: Suzuki, Kazuhiko, Yokosuka-shi, Kanagawa-ken 240-01 (JP); Watanabe, Takayuki, 509 Mitsui Toatsu, Yokohama-shi, Kanagawa-ken 244 (JP); Kitahara, Yasuhiro, Kawasaki-shi, Kanagawa-ken 210 (JP); Ajioka, Masanobu, Yokohama-shi, Kanagawa-ken 244 (JP)
(74) Representative: Strehl Schübel-Hopf & Partner

(56) References cited:
- EP-A- 0 401 844
- EP-A- 0 507 554
- DE-A- 3 635 679
- DATABASE WPI Derwent Publications Ltd., London, GB; AN 94-037921(059 XP002010135 & JP-A-05 342 903 (MITSUI TOATSU CHEM INC) , 24 December 1993
- DATABASE WPI Derwent Publications Ltd., London, GB; AN 93-137113(17) XP002010136 & JP-A-05 070 696 (TOPPAN PRINTING CO LTD) , 23 March 1993

## Description

### Background of the Invention

### 1. Field of the Invention

The present invention relates to a heat-resistant molded article of lactic acid-base polymer which has excellent heat resistance and impact strength and can be degraded after use in the natural environment.

### 2. Description of the Related Art.

Resins such as polypropylene and crystalline Polyethylene terephthalate (hereinafter referred to simply as PET) have been generally used as a raw material of containers having excellent heat resistance and impact strength. PET has a slow rate of crystallization and requires a long time for completing a molding cycle. Accordingly, the mold temperature is increased or a crystallization nucleating agent is added for overcoming the problem. However, molded products prepared from these resins increase the amount of scrap on waste disposal, although excellent in heat resistance. Additionally, these resins scarcely degrade in the natural environment and semi-permanently remain under the ground even in the case of burial disposal. Further, abandoned plastics have led to problems of impairing a grand view and destructing the living environment of marine organisms.

On the other hand, polylactic acid and a copolymer of lactic acid with other hydroxycarboxylic acid (hereinafter referred to simply as lactic acid-base polymer) have been developed as polymers which are thermoplastic and biodegradable. These polymers can be completely biodegraded in an animal body within a few months to an year. In the case of being left in soil or sea water, polymers initiate degradation within a few weeks and disappear in one to several years. Further, these polymers have the characteristic that decomposition products are lactic acid, carbon dioxide and water which are non-toxic for the human body.

Lactic acid which is a raw material of lactic acid-base polymer has been prepared by a fermentation process or chemical synthesis. L-lactic acid, in particular, is manufactured in a large scale with drop in price and also has a feature of providing high stiffness for the resulting polymer. Consequently, it is now expected to utilize various polymers having a high content of L-lactic acid.

Containers prepared by injection molding of lactic acid-base polymers have excellent stiffness. However, heat resistance of these polymers is low, or both heat resistance and impact resistance are low.

For example, hot water or a microwave oven cannot be used for the packaging containers prepared from these polymers. Thus, the field of use is restricted. It has been required for improving heat resistance to increase highly crystallinity by extending the mold cooling time in the processing step or by annealing the molded articles. However the mold cooling for a long time is not practical and tends to emerge insufficient crystallization. Post crystallization by annealing is liable to develop deformation of molded articles in the course of crystallization.

As to the process for increasing the rate of crystallization. addition of a nucleating agent has been known to accelerate crystallization. For example, Japanese Laid-Open Patent SHO 60-86156 has disclosed to add as a crystallization nucleating agent fine powder of the whole aromatic polyester comprising terephthalic acid and resorcinol as main constitutional units.

On the other hand, patents for adding nucleating agents to biodegradable polymers include, for example, Japanese Laid-Open Patent HEI 5-70696, Tokkyo Kohkai Kohyo HEI 4-504731, USP 5,180,765, Tokkyo Kohkai Kohyo HEI 6-504799, and Japanese Laid-Open Patent HEI 4-220456. Japanese Laid-Open Publication HEI 5-70696 has disclosed that 10 - 40 % by weight of calcium carbonate or hydrated magnesium silicate (talc) having an average particle size of 20 µm or less is added to biodegradable plastics such as a 3-hydroxybutyrate/3-hydroxyvalerate copolymer, polycaprolactone and polylactic acid in order to prepare a raw material of plastic containers. The object of this technique is to accelerate decomposition of the degradable plastics after waste-disposal by addition of a large amount of inorganic fillers, and not to intend to improve heat resistance of polymer by increasing crystallinity.

Tokkyo Kohkai Kohyo HEI 4-504731 (WO 90/01521) has described that properties such as hardness, strength and temperature resistance can be varied by addition of inorganic fillers such as silica and kaolinite to thermoplastics from lactide, and that, in the example, a L, DL-lactide copolymer was blended with 5 % by weight of calcium lactate as a nucleating agent by kneading on hot rolls at 170 °C and the resulting sheet increased stiffness and strength and was hazy as a result of crystallinity increase.

Tokkyo Kohkai Kohyo HEI 4-504799 (WO 92/04413) has described lactic acid salts and benzoic acid salts for use in a nucleating agent disclosed in the example that a copolymer of lactide was blended with 1 % of calcium lactate and injection molded into a mold maintained at 85 °C with a residence time of 2 minutes, resulted in insufficient crystallization, and thus further annealed in the mold at 110 - 135 °C.

In practice, a lactic acid-base polymer has been blended with a nucleating agent such as commonly used talc, silica, calcium lactate and sodium benzoate and injection molded. However, practically useful articles could not be molded because of a slow rate of crystallization and brittleness of the molded articles.

Consequently, even though these lactic acid-base polymers are subjected to common injection molding blow-forming or compression molding in the presence of usual talc or silica, uses of the molded articles obtained are restricted because crystallization speed is slow, the resulting molded articles have an actual heat resistance of 100 °C or less, and impact strength is not so high.

Japanese Laid-Open Patent HEI 4-220456 has disclosed that addition of polyglycolic acid or derivatives thereof as a nucleating agent to poly-L-lactide can increase crystallization temperature, reduce the injection cycle time, and provide excellent mechanical properties for the molded articles. It has been exemplified that in the case of injection molding, the crystallinity obtained after cooling for 60 seconds is 22.6 % in the absence of a nucleating agent and 45.5 % in the presence of a nucleating agent.

Injection molding of a lactic acid-base polymer was practically tried without a nucleating agent. However, injection molding could not be carried out at the mold temperature above Tg of the polymer, that is, under such conditions as described in Japanese Laid-Open Patent HEI 4-220456.

EP-A-0 507 554 discloses degradable moulded articles comprising a lactic acid base polymer, opt. copolymer such as ε-caprolactone, optionally a nucleating agent such as silica, clay, or kaolin, and optionally 5-50%, pref. 5-20% plasticiser such as polyester. The moulded articles exhibit good mechanical and heat isolating properties. EP-A-0 507 554 gives no hint which would lead the skilled person to operate a specific selection of base polymer, copolymer, nucleating agent, and dispersant in order to improve the properties of the moulded articles.

### Summary of the Invention

The object of the invention is to provide a molded article of a lactic acid-base polymer having an excellent heat resistance and impact strength.

As a result of an intensive investigation in order to achieve the above object, the present inventors have completed the invention.

An aspect of the present invention is a process for preparing a heat-resistant molded article of a lactic acid-base polymer comprising mixing 75 -95 % by weight of a lactic acid-base polymer with 5 - 25 % by weight of poly-ε-caprolactone so as to obtain an L-lactic acid ratio of 75 % by weight or more, adding 0.1 - 15 parts by weight of a crystalline inorganic powder comprising 50 % by weight or more of SiO₂ to 100 parts by weight of said polymer mixture, melt-kneading the resultant composition, filling the same into a mold of a molding machine at a mold temperature of 85-125 °C, and forming a shape while promoting crystallization.

Another aspect of the present invention is a process for preparing a heat-resistant molded article of a lactic acid-base polymer comprising mixing 100 parts by weight of a lactic acid-base polymer having an L-lactic acid ratio of 75 % by weight or more, 0.1 - 15 parts by weight of a crystalline inorganic powder comprising 50 % by weight or more of SiO₂ and 1-20 parts by weight of a polyester which is obtained by condensation of an aliphatic polyhydric alcohol with an aliphatic polybasic acid or with an aliphatic polybasic acid and a hydroxycarboxylic acid, melt-kneading the resultant composition, filling the same into a mold of a molding machine at a mold temperature of 85-125 °C, and forming a shape while promoting crystallization.

A further aspect of the present invention is a process for preparing a heat-resistant molded article of a lactic acid-base polymer comprising mixing 75 - 95 % by weight of a lactic acid-base polymer with 5 - 25 % by weight of poly-ε-caprolactone so as to obtain an L-lactic acid ratio of 75 % by weight or more, adding, to 100 parts by weight of the resultant mixture, 0.1-10 parts by weight of a crystalline inorganic powder comprising 50 % by weight or more of SiO₂ and 1-20 parts by weight of a polyester which has a weight average molecular weight of 80,000 - 300,000 which is obtained by condensation of an aliphatic polyhydric alcohol with an aliphatic polybasic acid or with an aliphatic polybasic acid and a hydroxycarboxylic acid, melt-kneading the resultant composition, filling the same into a mold of a molding machine at a mold temperature of 85- 125 °C, and forming a shape while promoting crystallization.

The molded articles of the lactic acid-base polymer obtained in the invention have excellent heat resistance and impact strength and are suitably used for a raw material of heat resistant food trays for use in microwave ovens and beverage cups. Further, when buried underground as wastes or abandoned in the sea or river, these articles are degraded in the natural environment within a relatively short period into nontoxic water and carbon dioxide like natural products such as wood and paper.

### Detailed Description of preferred Embodiments

The term "lactic acid-base polymer" in the invention refers to polylactic acid, a lactic acid/hydroxycarboxylic acid copolymer and a mixture thereof which have an L-lactic acid proportion of 75 % by weight or more in the polymer.

Lactic acid and hydroxycarboxylic acid are used as raw materials of the polymer. Lactic acid which can be used is L-lactic acid, D-lactic acid, DL-lactic acid, a mixture thereof and lactide which is the cyclic dimer of lactic acid. These kinds of lactic acids can be used in various combinations so as to obtain an L-lactic acid proportion of 75 % by weight or more in the lactic acid-base polymer.

Exemplary hydroxycarboxylic acid which can be used in combination with these kinds of lactic acid include glycolic acid, 3-hydroxybutyric acid, 4-hydroxybutyric acid, 4-hydroxyvaleric acid, 5-hydroxyvaleric acid and 6-hydroxycaproic acid. Cyclic dimers of hydroxycarboxylic acids, for example, glycolide which is a dimer of glycolic acid or a cyclic ester intermediate such as ε-caprolactone can also be used.

The lactic acid-base polymer which can be used in the invention is prepared from lactic acid having a L-lactic acid content of 75 % by weight or more or a lactic acid/hydroxycarboxylic acid mixture having an L-lactic acid content of 75 % by weight or more by direct dehydration polycondensation or by ring-opening polymerization of lactide which is a cyclic dimer of the above lactic acid, or a cyclic of hydroxycarboxylic acid, e. g. , glycolide which is a dimer of glycolic acid or a cyclic ester intermediate such as ε -caprolactone.

In the case of preparing by direct dehydration polycondensation, a high molecular weight lactic acid-base polymer having a suitable strength for the invention can be prepared by carrying out an azeotropic dehydration condensation of the raw material that is, lactic acid or a mixture of lactic acid and hydroxycarboxylic acid preferably in the presence of an organic solvent, a diphenyl ether-base solvent in particular, more preferably in the presence of a solvent recycle system where water is removed from the distilled solvent and the dehydrated solvent is returned to the reaction system.

The weight average molecular weight of the lactic acid-base polymer is preferably as high as possible in the range capable of being molded. A molecular weight of 30,000 or more is more preferred. When the weight average molecular weight of the polymer is less than 30,000, molded articles decrease in mechanical strength and become unsuitable for practical use. A polymer having an weight average molecular weight of 1, 000,000 or more can also be used for the preparation of molded articles of the invention by designing the molding ability of the polymer composition. The weight average molecular weight exceeding 5,000,000 is liable to make processability poor.

A specific agent serving as a nucleus of crystallization (hereinafter referred to simply as a nucleating agent) is used in the invention in order to promote crystallization of the lactic acid-base polymer. The nucleating agent acts as a heterogeneous nucleus of crystallization, reduces the surface free energy of the polymer accompanied by nucleus formation, and thus accelerates crystallization.

As a result, the polymer can more rapidly attain a certain crystallization speed in the processing step and thus the molded articles obtained are expected to have improved heat resistance.

Commonly used nucleating agents are not always useful for the invention. General purpose nucleating agents cannot so much increase the crystallization speed of the lactic acid-base polymer and cannot accomplish the object.

Nucleating agents which are suitable for crystallizing the lactic acid-base polymer are crystalline inorganic powder, more preferably crystalline powder containing 50 % by weight or more of SiO₂ component and having hydroxyl groups. When the above nucleating agents contain less than 50 % by weight of the SiO₂ component, or when the nucleating agents are amorphous even though in the presence of 50 % by weight or more of the SiO₂ component, the polymer has a low crystallization speed and is unsuitable for practical use. Low crystallization speed can also be seen by low heat of crystallization in the temperature lowering of a differential scanning calorimetry (hereinafter referred to simply as DSC) of the molded articles.

No particular restriction is imposed upon a pH of an aqueous nucleating agent solution. However, the pH is preferably 8.5 or less, more preferably 4- 8 in order to prevent strength reduction due to molecular weight decrease in the lactic acid-base polymer. In practice, particularly preferred nucleating agent are talc having 50 % by weight or more of the crystalline SiO₂ componet and pH of 8.5 or less, and kaolin having 50 % by weight or more of crystalline SiO₂ component and pH of 8.5 or less.

The amount for use is 0.1- 15 parts by weight, preferably 0.5- 7 parts by weight for 100 parts by weight of the lactic acid-base polymer.

When the amount is less than 0.1 part by weight, the effect of the nucleating agent cannot be exhibited. On the other hand, the amount exceeding 15 parts by weight is liable to decrease the molecular weight of the lactic acid-base polymer and results in giving an adverse effect on the properties of the polymer.

When a polymer-base dispersant is used, the amount of the nucleating agent is more preferably 0.1 - 15 parts by weight, most preferably 0.5 - 7 parts by weight for 100 parts by weight of the sum of the lactic acid-base polymer and dispersant. In the absence of the dispersant, the amount of the nucleating agent is more preferably 0.1 - 15 parts by weight, most preferably 0.5 - 7 parts by weight for 100 parts by weight of the lactic acid-base polymer.

In order to crystallize the lactic acid-base polymer, a polymer-base dispersant, polymer-base processability improver and crystallization accelerator can be added in addition to the nucleating agent.

When a polymer-base dispersant is used on crystallizing the composition of the lactic acid-base polymer and nucleating agent in the invention, the dispersion of the nucleating agent in the lactic acid-base polymer is improved and crystallization speed is accelerated, and hence, molded articles having uniformly excellent heat resistance and impact strength can be provided. Preferred dispersants are poly-ε-caprolactone and styrene-butadiene-base thermoplastic elastomers.

Poly- ε -caprolactone which can be used has a weight average molecular weight of preferably 50, 000 - 250, 000, more preferably 100, 000 - 150, 000. Higher molecular weight dispersant can be used so long as the dispersant can be uniformly mixed with the lactic acid base polymer.

When poly-ε-caprolactone is used, impact strength is also improved in addition to the dispersing effect.

Styrene-butadiene-base thermoplastic elastomer is a block copolymer obtained by using polystyrene as a hard segment and polybutadiene as a soft segment. The composition has a styrene/butadiene weight ratio of preferably in the range of 20/80- 45/55, more preferably in the range of 30/70 -40/60.

The mixture of the lactic acid-base polymer and dispersant can provide preferable crystallinity when the proportion of L-lactic acid is 75 % by weight or more for the total amount of the mixture. When the proportion of L-lactic acid is less than 75 % by weight, crystallinity becomes poor and molded articles having desired heat resistance cannot be obtained.

When a dispersant is used, the amount is preferably 5- 25 % by weight, more preferably 10- 20 % by weight for the lactic acid-base polymer. The amount exceeding 25 % by weight decreases strength of the molded articles or leads to poor processability and makes practical use difficult. On the other hand, the amount less than 5 % by weight results in insufficient effect of addition.

A polymer-base processability improver can be used for accelerating crystallization in the invention. The processability improver remarkably accelerates crystallization speed of the lactic acid-base polymer and molded articles can be obtained with an equivalent molding cycle to a general purpose resin, for example, polypropylene resin.

The processability improver of the invention exemplifies polyester derived from an aliphatic polyhydric alcohol and an aliphatic polybasic acid or polyester derived from an aliphatic polyhydric alcohol, an aliphatic polybasic acid and an hydroxycarboxylic acid. The processability improver has a weight average molecular weight of 10,000 - 1,000, 000, preferably 50,000-500,000 and more preferably 80, 000-300, 000. These polyesters also include those obtained by extending the polymer chain with a diisocyanate compound.

When the processability improver is used, the amount is preferably 1 - 20 parts by weight, more preferably 5- 15 parts by weight for 100 parts by weight of the lactic acid-base polymer, or in the case of using the dispersant, for 100 parts by weight of the sum of the lactic acid-base polymer and the dispersant. The amount of the processability improver exceeding 20 parts by weight leads to inferior stiffness of the molded articles and these articles are unsuitable for practical use. On the other hand, the amount less than 5 parts by weight results in unsatisfactory effect.

No particular restriction is imposed upon the aliphatic polyhydric alcohol. Aliphatic polyhydric alcohols which can be used include, for example, 1, 4-butanediol and ethylene glycol. Aliphatic polybasic acids are not limited in particular and exemplify succinic acid and adipic acid. No particular limitation is put upon the hydroxycarboxylic acid. Exemplary hydroxycarboxylic acids include lactic acid. Diisocyanate compounds are not particularly restricted and include hexamethylene diisocyanate.

A crystallization accelerator can be used in the invention in order to accelerate crystallization, when needed.

Use of the crystallization accelerator in combination with the nucleating agent can accelerate crystallization speed of the lactic acid-base polymer. As a result, the molding cycle time is reduced and molded articles of the heat-resistant lactic acid-base polymer have excellent heat resistance and impact strength.

Preferred crystallization accelerators in the invention include diisodecyl adipate, n-octyl-n-decyl adipate and other aliphatic dibasic acid esters; glycerol triacetate and other polyhydric alcohol esters; and tributyl acetylcitrate and other tributyl hydroxypolycarboxylates. When the crystallization accelerator is used in the invention, the amount is preferably 0.1 - 8 parts by weight, more preferably 1 - 5 parts by weight for 100 parts by weight of the lactic acid-base polymer, or, in the case of using the dispersant, for 100 parts by weight of the sum of the lactic acid base-polymer and the dispersant.

The amount of the crystallization accelerator less than 0.1 part by weight makes the effect of addition insufficient, whereas the amount exceeding 8 parts by weight gives unfavorable effect on the physical properties of the molded articles.

The composition of the invention comprising the lactic acid-base polymer, nucleating agent and when needed, the dispersant, processability improver and crystallization accelerator (hereinafter referred to simply as a lactic acid-base polymer composition) can be incorporated with other various modifiers depending upon the object for use of the molded articles. Exemplary modifiers include stabilizers and ultraviolet absorbers.

Mixing of the lactic acid-base polymer composition can be carried out by using usual mixing and kneading methods.

Crystallization of the lactic acid-base polymer composition can be carried out by setting the mold temperature at the crystallization temperature of the polymer and maintaining the mold temperature for a given time in the molding stage, or by annealing the molded articles at the crystallization temperature.

The method for maintaining the molded articles at the crystallization temperature for a given time in the molding stage is carried out by setting the mold temperature of an injection molding machine, blow molding machine or compression molding machine between the initiation and finishing temperature of crystallization in the temperature lowering of DSC and by crystallizing the composition of the invention in the mold. The heat-resistant molded articles of the lactic acid-base polymer having excellent heat-resistance and impact strength can be obtained by this method.

Mold temperature is generally 85-125 °C, preferably 90-115 °C, more preferably 100 - 110 °C. Within the temperature range, mold articles can crystallize with ease and high dimensional accuracy can be obtained as a result of sufficient solidification in the stage of removing the molded articles from the mold. Outside of the temperature range, the crystallization speed decreases and solidification time of the molded articles is extended and thus practical utility becomes inferior.

The lactic acid-base polymer composition of the invention can be prepared by mixing with known mixing techniques such as a Henschel mixer and ribbon blender or further by melt-kneading with an extruder. The lactic acid-base polymer composition can be used for molding in any form of pellet, bar, powder and granule.

Next, the process for preparing molded articles from the lactic acid-base polymer composition of the invention will be illustrated in detail.

The process for preparing molded articles of the lactic acid-base polymer is carried out by uniformly mixing the lactic acid-base polymer composition with a blender and successively undergoing injection molding, blow-molding or compression molding.

In order to prepare molded articles having excellent heat resistance, the mold temperature in the injection molding is set generally at 85 - 125 °C, preferably at 95 - 110 °C, that is, a temperature range between initiation and finishing temperature of crystallization in the temperature lowering of DSC. The lactic acid-base polymer composition is generally melted at 180 - 250 °C in the cylinder of a molding machine, filled into the mold, crystallized, and the molded articles are removed from the mold. For example, a mixture comprising 100 parts by weight of the lactic acid-base polymer and 1 parts by weight of prescribed talc has a crystallization initiation temperature of 120 °C and crystallization finishing temperature of 95 °C in the temperature lowering. A mixture comprising 100 parts by weight of the polymer, 3 parts by weight of prescribed talc and 5 parts by weight of DIDA has a crystallization initiation temperature of 114 °C and crystallization finishing temperature of 90 °C in the temperature lowering. Mold temperature setting in the above crystallization range is effective for improving heat resistance of the molded articles. In the case of blow molding, a parison is delivered from a die which is mounted on an extruder head, inserted into a mold which was previously set in the above temperature range, blown with the air and successively crystallized. In the case of compression molding, the temperature of the mold was previously set at 180- 250 °C, the polymer composition is charged into mold, pressure is applied to the mold, and the mold is successively cooled to the above temperature range to promote crystallization. Cooling time differs depending upon molding method, and shape and thickness of the molded articles, and is generally in the range of 10-100 seconds.

Heat resistance in the invention is shown by a Vicat softening point in accordance with ASTM-D1525. A needle is vertically placed on a sample under load of 1 kg. Temperature is increased at a constant rate.

The temperature when the needle penetrates 1 mm into the sample is defined as the softening point. The Vicat softening point of heat-resistant molded articles obtained from the lactic acid-base polymer of the invention differs depending upon the amount of the nucleating agent, dispersant, processability improver and crystallization accelerator. The softening point is generally 100 - 160 °C in view of heat resistance for a microwave oven and practical utility, preferably 120-160 160 °C, more preferably 130- 150 °C, most preferably 140∼150 °C. Molded articles of the lactic acid-base polymer have a Vicat softening point almost corresponding to the heat resistant temperature defined in accordance with JIS-S 2033, Method for Testing Plastic Containers used in a Microwave Oven, which is a specification indicating heat resistance. A molded container of the lactic acid-base polymer having a Vicat softening point of 149 °C was maintained at 150 °C for an hour in the air in a constant temperature oven equipped with a stirrer. After allowing to cool to the room temperature, no abnormality such as deformation were not observed on the container.

According to the present invention, excellently heat-resistant containers and other molded articles can be efficiently prepared from the lactic acid-base polymer with a common molding machine used for molding polystyrene and other general purpose resins. The molded products are applied to various uses such as everyday items and miscellaneous goods, particularly containers for use in a microwave oven.

### Example

The present invention will now be illustrated in detail by way of examples and comparative examples.

In these examples, part means part by weight.

A weight average molecular weight of polymer was measured by gel permeation chromatography using polystyrene as a reference under the following conditions.
Equipment : Shimadzu LC-10AD
Detector : Shimadzu RID-6A
Column : Hitachi chemical S-350DT-5, S-370DT-5
Solvent : Chloroform
Concentration : 1 %
Pour Volume : 20 µl
Flow rate : 1.0 ml/min

### Preparation Example 1

Into a thick-walled cylindrical stainless steel polymerization reactor equipped with a stirrer, 100 parts of L-lactide, 0.01 parts of stannous octoate and 0.03 part of lauryl alcohol were sealed, deaerated under vacuum for 2 hours and successively replaced by nitrogen gas. The mixture was heated at 200 °C for 3 hours with stirring in a nitrogen atmosphere. While maintaining the same temperature, the reaction vessel was gradually deaerated with a vacuum pump by way of an outlet tube and a glass receiver to a reduced pressure of 400 Pa (3 mm Hg). After an hour from starting deaeration, distillation of the monomer and low molecular weight volatile ingredients was ceased. The reaction vessel was replaced by nitrogen. The reaction product was discharged in the form of a strand from the bottom of the reaction vessel and cut into pellets to obtain lactic acid-base polymer A having an L-lactic acid ratio of 100 %. The polymer had a weight average molecular weight Mw about 100,000 and Tg of 59 °C.

### Preparation Example 2

In a 100 ℓ reaction vessel equipped with a Dean Stark trap, 10 kg of 90 % purity L-lactic acid (L-lactic acid ratio 100 %) was stirred at 150 °C for 3 hours under reduced pressure of 50 mm Hg while distilling out water, successively 6.2 kg of tin powder was added, and stirring was continued at 150 °C for 2 hours under reduced pressure of 30 mm Hg to obtain an oligomer. The oligomer was mixed with 28.8 g of tin powder and 21.1 kg of diphenyl ether. An azeotropic dehydration reaction was conducted on the mixture at 150 °C under reduced pressure of 35 mm Hg while separating distilled water and the solvent in the water separator and returning the solvent alone to the reaction vessel. After two hours, configuration of the equipment was changed so as to return the organic solvent to the reaction vessel after passing through a column packed with 4.6 kg of molecular sieve 3A. The reaction was further continued at 150 °C for 40 hours under reduced pressure of 4666 Pa (35 mm Hg) to obtain a solution of polylactic acid having an average molecular weight of 110, 000. The solution was mixed with 44 kg of dehydrated diphenyl ether and cooled to 40 °C. Precipitated crystals were filtered, washed 3 times with 10 kg each of n-hexane and dried at 60°C under reduced pressure of 6666 Pa (50 mm Hg). The powder thus obtained was mixed with 12 kg of 0.5 N-hydrochloric acid and 12 kg of ethanol. The mixture was stirred at 35 °C for an hour, filtered and dried at 60 °C under reduced pressure of 6666 Pa (50 mm Hg) to obtain 6.1 kg (85 % yield) of polylactic acid powder.

The powder was pelletized by melting in an extruder to obtain lactic acid polymer B having a L-lactic acid ratio of 100 %. Polymer B had a weight average molecular weight of 110, 000 and Tg of 59 °C.

### Preparation Example 3

Pellets of DL-lactic acid polymer C having an L-lactic acid ratio of 50 % were obtained by carrying out the same procedures as described in Preparation Example 2 except that 100 parts of L-lactic acid was replaced by 100 parts of DL-lactic acid. The polymer had a weight average molecular weight of 110, 000 and Tg of 50 °C.

### Preparation Example 4

The same procedures as described in Preparation Example 2 were carried out except that 100 parts of L-lactic acid was replaced by 80 parts of L-lactic acid and 20 parts of glycolic acid as a hydroxycarboxylic acid component. Pellets of lactic acid/hydroxycarbox ylic acid copolymer D having a L-lactic acid ratio of 80 % by weight were prepared. The polymer had a weight average molecular weight of 100, 000 and Tg of 49 °C.

### [Preparation of processability improver]

### Preparation Example 5

To a mixture of 50.5 g of 1,4-butanediol and 66.5 g of succinic acid, 293.0 g of diphenyl ether and 2.02 g of metallic tin were added and heated with stirring at 130 °C for 7 hours under reduced pressure of 140 mm Hg to obtain an oligomer. Thereafter a Dean Stark trap was mounted on the reaction vessel and azeotropic dehydration was carried out at 140 °C for 8 hours under reduced pressure of 4000 Pa (30 mm Hg). In the next step, a tube packed with 40 g of molecular sieve 3A was fitted so as to return the distilled solvent to the reaction vessel by way of a molecular sieve layer and the reaction mixture was further stirred at 130 °C for 49 hours under reduced pressure of 2266 Pa (17 mm Hg). The reaction mass was dissolved in 600 ml of chloroform and poured into 4 liters of acetone. The reprecipitated product was sludged 3 times for 0.5 hour each with an isopropanol (IPA) solution of hydrochloric acid having a HCl content of 0.7 wt%, washed with IPA and dried at 60 °C for 6 hours under reduced pressure to obtain polybutylene succinate (PSB). The polymer had a weight average molecular weight of 118, 000.

### Preparation Example 6

To 18.9 g ethylene glycol and 34.25 g of succinic acid, 0.210 g of metallic tin was added and the mixture was heated with stirring while distilling water out of the reaction system by ventilating nitrogen at a flow rate of 0.5/min. The temperature was increased from the room temperature to 150 °C over an hour under 1 atmosphere. The reaction was continued for 6 hours under the same conditions. Successively a Dean Stark Trap was mounted on the vessel, 155 g of diphenyl ether was added, and an azeotropic reaction was carried out at 150 °C for 8 hours under reduced pressure of 38 mm Hg while removing generated water. Thereafter the Dean Stark Trap was replaced by a tube packed with 20 g of molecular sieve 5A so as to return distilled water to the reaction system after passing through the molecular sieve. The reaction was further continued at 130 °C for 34 hours. Before finishing the reaction, a small amount of sample was taken out at the outlet of the molecular sieve packed tube and analyzed. The returning solvent had a water content of less than 5 ppm and an ethylene glycol content of less than a detection limit 10 ppm.

The reaction mass was dissolved in 500 ml of chloroform and poured into 5.8 liters of acetone. The reprecipitated product was dried at 60 °C for 6 hours under reduced pressure to obtain polyethylene succinate (PSE). The polymer had a weight average molecular weight of 139, 000.

Next, the process for preparing formed articles of L-lactic acid-base polymer of the invention by using lactic acid-base polymers obtained in the Preparation Examples 1 - 4 will be illustrated by the example hereinafter.

Physical properties were measured by the following conditions.
1) crystallization temperature at DSC temperature lowering
   A differential scanning calorimeter DSC-50 (manufactured by Shimadzu Seisakusho Co.) was used.
   After heating 5 mg of a pellet sample to 200 °C at a temperature increase rate of 10 °C/min, the sample was maintained at 200 °C for 5 minutes and crystallization temperature was measured at a temperature lowering rate of 5 °C/min.
2) Crystallinity
   An X-ray diffractometer Rint 1500 (manufactured by Rigaku Denki Co.) was used and molded specimens were measured.
3) Heat resistance
   Vicat softening temperature was measured on molded specimens under load of 1 kgf in accordance with ASTM-D1525.
4) Impact strength
   Izod impact strength was measured by using a notched specimen in accordance with ASTM-D256.
5) Degradability
   A specimen having dimensions of 2×5 cm was buried in soil at 35 °C under moisture content of 30 %. Change of appearance and weight loss of the specimen were inspected.

### Examples 1-5

### [Use of dispersant]

The lactic acid-base polymers A- D obtained in Preparation Examples 1- 4, poly-ε-caprolactone dispersant P-787 (Trade Mark of TONE hereinafter referred to simply PCL), or styrene butadiene base thermoplastic elastomer dispersant TUFPRENE A (Trade Mark of Asahi Chemical Co., hereinafter referred to simply as SB), talc (manufactured by Fuji Talc Co., SiO₂ content 60 %, crystalline product) as a nucleating agent, and diisodecyl adipate (hereinafter referred to simply as DIDA) and tributyl acetyl citrate (hereinafter referred to simply as ATBC) as crystallization accelerators were used in a proportion illustrated in Table 1. These raw materials were mixed in a Henschel mixer, melt-kneaded in an extruder at a cylinder temperature of 170 - 210 °C and pelletized. The pellets were molded in an injection molding machine JSW-75 (manufactured by Japan Steel Works Co.) at a cylinder temperature of 180-200 °C, a mold temperature of 100 °C and a mold cooling time of 30 seconds in Examples 1-3 and 5 or 80 seconds in Example 4. ASTM test specimens thus prepared were used for measuring physical properties. Results are illustrated in Table 1.

### Examples 6- 7

### [Use of processability improver]

The lactic acid-base polymer B obtained in Preparation Example 2, nucleating agent, crystallization accelerator, and PSB obtained in Preparation Example 5 or PSE obtained in Preparation Example 6 as processability improver were used in proportions illustrated in Tables 1 and 2.

The raw materials were mixed in a Henschel mixer and pelletized and injection molded by the same procedures as Example 1 to obtain ASTM test specimens.

Cooling time in the mold could be reduced to 20 seconds.

Results are illustrated in Tables 1 and 2.

### Example 8

### [Use of dispersant and processability improver]

The lactic acid-base polymer B, dispersant, nucleating agent, crystallization accelerator and processability improver were mixed with a Henschel mixer in a proportion illustrated in Table 2, and pelletized and injection molded by the same procedures as described in Example 2 to obtain ASTM test specimens. Cooling time in the mold could be reduced to 20 seconds. Results are illustrated in Table 2.

### Examples 9-11

### [Kind of nucleating agent]

The lactic acid-base polymer B obtained in Preparation Example 2, dispersant, crystallization accelerator, and individually 3 % by weight of kaolin JP-100 (SiO₂ content 80 %, crystalline), silica (SiO₂ content 97 %, crystalline) or kaolin clay (SiO₂ content 80 %, crystalline) were mixed and pelletized by carrying out the same procedures as Example 1 to obtain ASTM test specimens. Results are illustrated in Table 2. Nucleating agents were crystalline and had a SiO₂ content of 50 % or more and thus molding ability and heat resistance of molded products were good.

### Comparative Example 1

### [Without dispersant and processability improver]

The dispersing agent was omitted, and the lactic acid-base polymer B obtained in Preparation Example 2, nucleating agent and crystallization accelerator were mixed with a Henschel mixer in a proportion illustrated in Table 3. The mixture was pelletized and injection molded by the same procedures as Example 1 to obtain ASTM test specimens. Results are illustrated in Table 3. Because of the absence of a dispersant PCL, dispersion of the nucleating agent was poor and local aggregation was observed. Impact strength was also low.

### Comparative Example 2

### [Outside ratio of L-lactic acid]

The lactic acid-base polymer A and C obtained respectively in Preparation Examples 1 and 3 were mixed with a dispersant to make an L-lactic acid ratio 60 %. Thereafter a nucleating agent and crystallization accelerator were added in a proportion illustrated in Table 3, mixed with a Henschel mixer, and pelletized and injection molded to obtain ASTM test specimens. Results are illustrated in Table 3.

The polymer had an L-lactic acid ratio less than 75 % by weight and thus molded specimens led to deformation in the stage of mold release even though the nucleating agent was added.

### Comparative Example 3

### [Without nucleating agent, processability improver and crystallization accelerator]

Pellets of lactic acid-base polymer B obtained in Preparation Example 2 were used. The pellets were injection molded at a cylinder temperature of 180 - 200 °C, mold temperature of 100 °C and mold cooling time of 80 seconds to obtain ASTM test specimens. Results are illustrated in Table 3.

Molded specimens were greatly deformed in the stage of mold release because the specimens were too soft due to absence of a nucleating agent.

### Comparative Example 4

### [Outside amount of nucleating agent]

Molded specimens were prepared by carrying out the same procedures as described in Example 2 except that the nucleating agent was used in an amount of 20 parts by weight which exceed the range of 0.1 - 15 parts by weight in the invention. Results are illustrated in Table 3.

Molded specimens had a low impact strength.

### Comparative Example 5

### [Outside amount of crystallization accelerator]

Molded specimens were prepared by carrying out the same procedures as described in Example 2 except that the crystallization accelerator was used in an amount of 11 parts by weight which exceed the range of 0.1 - 8 parts by weight in the invention. Results are illustrated in Table 3. Molded specimens had a low impact strength.

### Comparative Example 6

### [Outside amount of processability improver]

Molded specimens were prepared by carrying out the same procedures as described in Example 6 except that the processability improver was used in an amount of 30 parts by weight which exceed the range of 1 - 20 parts by weight in the invention. Results are illustrated in Table 3.

Molded specimens had poor dimensional accuracy and consistent products could not be obtained.

### Comparative Examples 7-11

### [Kind of nucleating agent]

Molded specimens were tried to prepare by carrying out the same procedures as described in Example 2 except that 3 % by weight of the nucleating agent talc was individually replaced by 3 % by weight of a crystalline nucleating agent having a SiO₂ content of less than 50 % or an amorphous nucleating agent having a SiO₂ content of 50 % or more. Nucleating agents used were herein UW (SiO₂ content 45 %, crystalline), kaolinite (SiO₂ content 45 %, crystalline), talc RF (SiO₂ content 40 %, crystalline). synthetic silica (SiO₂ content 90 %, amorphous) and silica (SiO₂ content 90 %, amorphous). These formulations are illustrated in Table 4.

These molded specimens were too soft in the stage of molded release. led to large deformation and could not be used for measuring the physical properties.

### [Effect of molding conditions]

### Examples 12-13

Pellets were prepared by carrying out the same procedures as described in Example 2. The pellets were injection molded at a cylinder temperature of 180- 200 °C which is within the range of Example 2. Mold temperature was changed to 95 °C and 110 °C respectively, which are within the peak range of DSC lowering crystallization temperature. Other injection molding conditions were the same as Example 2. Results are illustrated in Table 5.

### Comparative Examples 12-14

Pellets were prepared by carrying out the same procedures as described in Example 2. The pellets were injection molded at a cylinder temperature of 180-200 °C which is within the range of Example 2.

Mold temperature was changed to a temperature outside the peak range of DSC lowering crystallization temperature. That is, mold temperature was set at 30 °C in Comparative Example 12, 130 °C in Comparative Example 13, and 80 °C in Comparative Example 14. Other injection molding conditions were the same as Example 2. Results are illustrated in Table 5.

Molded specimens obtained in Comparative Example 12 had poor heat resistance because of amorphous property. Molded specimens obtained in Comparative Examples 13 and 14 were too soft and led to large deformation in the stage of mold release because mold temperature was above Tg and the polymer was amorphous.

### Comparative Example 15

ASTM test specimens were prepared by carrying out the same procedures as described in Example 1 except that the lactic acid-base polymer A was replaced by polypropylene resin and mold temperature was set at 30 °C. Results are illustrated in Table 5.

The molded specimens had poor degradability in soil.

However, these examples are not intended to limit scope of the present invention. This may be practiced or embodied in still other ways without departing from the spirit or essential character thereof.

**Table 1**

| | | Example 1 | Example 2 | Example 3 | Example 4 | Example 5 | Example 6 |
|---|---|---|---|---|---|---|---|
| Polymer composition | Lactic acid-base polymer (wt%) | A 80 | B 90 | B 60 C 30 | D 95 | B 90 | B100 |
| | Dispersant (wt%) | PCL 20 | PCL 10 | SB 10 | PCL 5 | PCL 10 | - |
| | L-lactic acid ratio (%) | 80 | 90 | 75 | 76 | 90 | 100 |
| | Amount (wt part) | 100 | 100 | 100 | 100 | 100 | 100 |
| Nucleating agent (wt part) | | talc 3 | talc 3 | talc 5 | talc 3 | talc 5 | talc 3 |
| Processability improver (wt part) | | - | - | - | - | - | PSB 10 |
| Crystallization accelerator (wt part) | | ATBC 1 | DIDA 1 | DIDA 1 | - | DIDA 3 | DIDA 1 |
| Processability | | excellent | excellent | excellent | good | excellent | very excellent |
| Heat resistance (°C) | | 150 | 149 | 148 | 148 | 150 | 147 |
| Impact resistance (kg/cm²) | | 12 | 9 | 7 | 8 | 9 | 9 |
| Degradability in soil | | after 3 months, readily broken by external force | | | | | |
| Weight loss (%) | | 35 | 28 | 15 | 29 | 29 | 27 |

**Table 2**

| | | Example 7 | Example 8 | Example 9 | Example 10 | Example 11 |
|---|---|---|---|---|---|---|
| Polymer composition | Lactic acid-base polymer (wt%) | B 100 | B 90 | B 100 | B 100 | B 100 |
| | Dispersant (wt%) | - | PCL 10 | PCL 10 | PCL 10 | PCL 10 |
| | L-lactic acid ratio (%) | 100 | 90 | 90 | 90 | 90 |
| | Amount (wt part) | 100 | 100 | 100 | 100 | 100 |
| Nucleating agent (wt part) | | talc 3 | talc 3 | kaolin JP100 3 | silica 3 | kaolin clay 3 |
| Processability improver (wt part) | | PSE 5 | PSB 10 | - | - | - |
| Crystallization accelerator (wt part) | | DIDA 1 | DIDA 1 | DIDA 1 | DIDA 1 | DIDA 1 |
| Processability | | excellent | Very excellent | excellent | excellent | excellent |
| Heat resistance (°C) | | 148 | 147 | 149 | 149 | 149 |
| Impact resistance (kg/cm²) | | 8 | 10 | 9 | 9 | 9 |
| Degradability in soil | | after 3 months, readily broken by external force | | | | |
| Weight loss (%) | | 23 | 32 | 27 | 28 | 28 |

**Table 3**

| | | Comparative Example 1 | Comparative Example 2 | Comparative Example 3 | Comparative Example 4 | Comparative Example 5 | Comparative Example 6 |
|---|---|---|---|---|---|---|---|
| Polymer composition | Lactic acid-base polymer (wt%) | B 100 | B 30 C 60 | B 90 | B 90 | B 90 | B 90 |
| | Dispersant (wt%) | - | PCL 10 | PCL 10 | PCL 10 | PCL 10 | PCL 10 |
| | L-lactic acid ratio (%) | 100 | 60 | 90 | 90 | 90 | 90 |
| | Amount (wt part) | 100 | 100 | 100 | 100 | 100 | 100 |
| Nucleating agent (wt part) | | talc 3 | talc 3 | - | talc 20 | talc 3 | talc 3 |
| Processability improver (wt part) | | - | - | - | - | - | PSB 30 |
| Crystallization accelerator (wt part) | | DIDA 1 | DIDA 1 | - | DIDA 1 | DIDA 11 | DIDA 1 |
| Processability | | excellent | poor | poor | good | good | poor |
| Heat resistance (°C) | | 148 | 58 | 58 | 149 | 120 | - |
| Impact resistance (kg/cm²) | | 2 | - | - | 4 | 4 | 15 |
| Degradability in soil | | after 3 months, readily broken by external force | | | | | |
| Weight loss (%) | | 10 | 28 | 28 | 31 | 30 | 35 |

**Table 4**

| | | Comparative Example 7 | Comparative Example 8 | Comparative Example 9 | Comparative Example 10 | Comparative Example 11 |
|---|---|---|---|---|---|---|
| Polymer composition | Lactic acid-base polymer (wt%) | B 90 | B 90 | B 90 | B 90 | B 90 |
| | Dispersant (wt%) | PCL 10 | PCL 10 | PCL 10 | PCL 10 | PCL 10 |
| | L-lactic acid ratio (%) | 90 | 90 | 90 | 90 | 90 |
| | Amount (wt part) | 100 | 100 | 100 | 100 | 100 |
| Nucleating agent (wt part) | | kaolin UW 3 | kaolinite 3 | talc RF 3 | synthetic silica 3 | silica 3 |
| Processability improver (wt part) | | - | - | - | - | - |
| Crystallization accelerator (wt part) | | DIDA 1 | DIDA 1 | DIDA 1 | DIDA 1 | DIDA 1 |
| Processability | | poor | poor | poor | poor | poor |
| Heat resistance (°C) | | - | - | - | - | - |
| Impact resistance (kg/cm²) | | - | - | - | - | - |
| Degradability in soil | | - | - | - | - | - |
| Weight loss (%) | | - | - | - | - | - |

**Table 5**

| | | Example 12 | Example 13 | Comparative Example 12 | Comparative Example 13 | Comparative Example 14 | Comparative Example 15 |
|---|---|---|---|---|---|---|---|
| Polymer composition | Lactic acid-base polymer (wt%) | B 90 | B 90 | B 90 | B 90 | B 90 | poly-propylene resin |
| | Dispersant (wt%) | PCL 10 | PCL 10 | PCL 10 | PCL 10 | PCL 10 | |
| | L-lactic acid ratio (%) | 90 | 90 | 90 | 90 | 90 | |
| | Amount (wt part) | 100 | 100 | 100 | 100 | 100 | 100 |
| Nucleating agent (wt part) | | talc 3 | talc 3 | talc 3 | talc 3 | talc 3 | - |
| Processability improver (wt part) | | - | - | - | - | - | - |
| Crystallization accelerator (wt part) | | DIDA 1 | DIDA 1 | DIDA 1 | DIDA 1 | DIDA 1 | - |
| (°C) | | 95 | 110 | 30 | 130 | 80 | 30 |
| Processability | | excellent | excellent | good | poor (deform) | poor (deform) | excellent |
| Heat resistance (°C) | | 150 | 149 | 57 | 58 | 58 | 151 |
| impact resistance (kg/cm²) | | 8 | 8 | - | - | - | 12 |
| Degradability in soil | | after 3 months, readily broken by external force | | | | | no change |
| Weight loss (%) | | 28 | 28 | 30 | 29 | 31 | 0 |

## Claims

1. A process for preparing a heat-resistant molded article of a lactic acid-base polymer comprising mixing 75-95 % by weight of a lactic acid-base polymer with 5-25 % by weight of poly-ε-caprolactone so as to obtain a L-lactic acid ratio of 75 % by weight or more, adding 0.1-15 parts by weight of a crystalline inorganic powder comprising 50 % by weight or more of SiO₂ to 100 parts by weight of said polymer mixture, melt-kneading the resultant composition, filling the same into a mold of a molding machine at a mold temperature of 85- 125 °C, and forming a shape while promoting crystallization.

2. A process for preparing a heat-resistant molded article of a lactic acid-base polymer comprising mixing 100 parts by weight of a lactic acid-base polymer having a L-lactic acid ratio of 75 % by weight or more, 0.1-15 parts by weight of a crystalline inorganic powder comprising 50 % by weight or more of SiO₂ and 1-20 parts by weight of a polyester which is obtained by condensation of an aliphatic polyhydric alcohol with an aliphatic polybasic acid or with an aliphatic polybasic acid and a hydroxycarboxylic acid, melt-kneading the resultant composition, filling the same into a mold of a molding machine at a mold temperature of 85-125 °C, and forming a shape while promoting crystallization.

3. The process of claim 1 wherein 1- 20 parts by weight of a polyester which has a weight average molecular weight of 80, 000-300, 000 which is obtained by condensation of an aliphatic polyhydric alcohol with an aliphatic polybasic acid or with an aliphatic polybasic acid and an hydroxycarboxylic acid is mixed with 100 parts by weight of the mixture of the lactic acid-base polymer and poly-ε-caprolactone.

4. The process of claim 1 wherein 0.1- 8 parts by weight of an aliphatic dibasic acid ester, polyhydric alcohol ester or tributyl hydroxypolycarboxylate is added to 100 parts by weight of the mixture of the lactic acid-base polymer and poly- ε -caprolactone.

5. The process of claim 2 wherein 0.1 - 8 parts by weight of an aliphatic dibasic acid ester, polyhydric alcohol ester or tributyl hydroxypolycarboxylate is added to 100 parts by weight of the lactic acid-base polymer.

6. The process of claim 3 wherein 0.1- 8 parts by weight of an aliphatic dibasic acid ester, polyhydric alcohol ester or tributyl hydroxypolycarboxylate is added to 100 parts by weight of the mixture of the lactic acid-base polymer and poly- ε -caprolactone.

7. A heat-resistant molded article of a lactic acid-base polymer having heat resistance of 100 - 160 °C comprising 100 parts by weight of a polymer mixture consisting of 75- 95 % by weight of a lactic acid-base polymer and 5 - 25 % by weight of poly- ε -caprolactone and having an L-lactic acid ratio of 75 % by weight or more and 0.1 - 15 parts by weight of a crystalline inorganic powder comprising 50 % by weight or more of SiO₂.

8. A lactic acid-base polymer composition comprising 100 parts by weight of a lactic acid-base polymer having an L-lactic acid ratio of 75 % by weight or more, 0.1- 15 parts by weight of a crystalline inorganic powder comprising 50 % by weight or more of SiO₂, and 1 - 20 parts by weight of a polyester which is obtained by condensation of an aliphatic polyhydric alcohol with an aliphatic polybasic acid or with an aliphatic polybasic acid and a hydroxycarboxylic acid.

9. A heat-resistant molded article which has heat resistance of 100 - 160 °C and is obtained by molding the lactic acid-base polymer composition of claim 8.

10. A lactic acid-base polymer composition comprising 100 parts by weight of a polymer mixture consisting of 75 - 95 % by weight of a lactic acid-base polymer and 5 - 25 % by weight of poly- ε -caprolactone and having an L-lactic acid ratio of 75 % by weight or more, 0.1 - 15 parts by weight of a crystalline inorganic powder comprising 50 % by weight or more of SiO₂ and 1 - 20 parts by weight of a polyester which is obtained by condensation of an aliphatic polyhydric alcohol with an aliphatic polybasic acid or with an aliphatic polybasic acid and hydroxycarboxylic acid.

11. A heat-resistant molded article of the lactic acid-base polymer which has heat resistance of 100 - 160 °C and is obtained by molding the lactic acid-base polymer composition of claim 10.

## Patentansprüche

1. Verfahren zur Herstellung eines wärmebeständigen Formkörpers aus einem Polymer auf Basis von Milchsäure, welches das Vermischen von 75 bis 95 Gew.-% eines Polymers auf Basis von Milchsäure mit 5 bis 25 Gew.-% Poly-ε-caprolacton, so daß ein Anteil an L-Milchsäure von 75 Gew.-% oder darüber erreicht wird, die Zugabe von 0,1 bis 15 Gew.-Teilen eines kristallinen anorganischen Pulvers, das 50 Gew.-% oder mehr an SiO₂ enthält, zu 100 Gew.-Teilen des Polymergemisches, das Schmelzkneten der gebildeten Zusammensetzung, Einfüllen derselben in die Form einer Formvorrichtung bei einer Formtemperatur von 85 bis 125°C und Formen eines Formkörpers unter gleichzeitigem Fördern der Kristallisation umfaßt.

2. Verfahren zur Herstellung eines wärmebeständigen Formkörpers aus einem Polymer auf Basis von Milchsäure, welches das Vermischen von 100 Gew.-Teilen eines Polymers auf Basis von Milchsäure mit einem Anteil an L-Milchsäure von 75 Gew.-% oder darüber, 0,1 bis 15 Gew.-Teilen eines kristallinen anorganischen Pulvers, das 50 Gew.-% oder mehr an SiO₂ enthält, und 1 bis 20 Gew.-Teilen eines Polyesters, der durch Kondensation eines aliphatischen mehrwertigen Alkohols mit einer aliphatischen mehrbasischen Säure oder mit einer aliphatischen mehrbasischen Säure und einer Hydroxycarbonsäure erhalten wurde, Schmelzkneten der gebildeten Zusammensetzung, Einfüllen derselben in die Form einer Formvorrichtung bei einer Formtemperatur von 85 bis 125°C und Formen eines Formkörpers unter gleichzeitigem Fördern der Kristallisation umfaßt.

3. Verfahren nach Anspruch 1, wobei 1 bis 20 Gew.-Teile eines Polyesters mit einem Gewichtsmittel des Molekulargewichts von 80 000 bis 300 000, der durch Kondensation eines aliphatischen mehrwertigen Alkohols mit einer aliphatischen mehrbasischen Säure oder mit einer aliphatischen mehrbasischen Säure und einer Hydroxycarbonsäure erhalten wurde, mit 100 Gew.-Teilen des Gemisches aus dem Polymer auf Basis von Milchsäure und Poly-ε-caprolacton vermischt werden.

4. Verfahren nach Anspruch 1, wobei 0,1 bis 8 Gew.-Teile eines Esters einer aliphatischen dibasischen Säure, eines Esters eines mehrwertigen Alkohols oder Tributylhydroxypolycarboxylat zu 100 Gew.-Teilen des Gemisches aus dem Polymer auf Basis von Milchsäure und Poly-ε-caprolacton zugesetzt werden.

5. Verfahren nach Anspruch 2, wobei 0,1 bis 8 Gew.-Teile eines Esters einer aliphatischen dibasischen Säure, eines Esters eines mehrwertigen Alkohols oder Tributylhydroxypolycarboxylat zu 100 Gew.-Teilen des Gemisches aus dem Polymer auf Basis von Milchsäure zugesetzt werden.

6. Verfahren nach Anspruch 3, wobei 0,1 bis 8 Gew.-Teile eines Esters einer aliphatischen dibasischen Säure, eines Esters eines mehrwertigen Alkohols oder Tributylhydroxypolycarboxylat zu 100 Gew.-Teilen des Gemisches aus dem Polymer auf Basis von Milchsäure und Poly-ε-caprolacton zugesetzt werden.

7. Wärmebeständiger Formkörper aus einem Polymer auf Basis von Milchsäure, der Wärmebeständigkeit bei 100 bis 160°C hat, enthaltend 100 Gew.-Teile eines Polymergemisches, das aus 75 bis 95 Gew.-% eines Polymers auf Basis von Milchsäure und 5 bis 25 Gew.-% Poly-ε-caprolacton besteht und einen Anteil an L-Milchsäure von 75 Gew.-% oder darüber hat und 0,1 bis 15 Gew.-Teile eines kristallinen anorganischen Pulvers, das 50 Gew.-% oder mehr an SiO₂ enthält.

8. Polymerzusammensetzung auf Basis von Milchsäure, die 100 Gew.-Teile eines Polymers auf Basis von Milchsäure mit einem Anteil an L-Milchsäure von 75 Gew.-% oder mehr, 0,1 bis 15 Gew.-Teile eines kristallinen anorganischen Pulvers, das 50 Gew.-% oder mehr an SiO₂ enthält und 1 bis 20 Gew.-Teile eines Polyesters umfaßt, der durch Kondensation eines aliphatischen mehrwertigen Alkohols mit einer aliphatischen mehrbasischen Säure oder mit einer aliphatischen mehrbasischen Säure und einer Hydroxycarbonsäure erhalten wurde.

9. Wärmebeständiger Formkörper, der Wärmebeständigkeit bei 100 bis 160°C hat und durch Verformen der Polymerzusammensetzung auf Basis von Milchsäure gemäß Anspruch 8 erhalten wurde.

10. Polymerzusammensetzung auf Basis von Milchsäure, enthaltend 100 Gew.-Teile eines Polymergemisches, das aus 75 bis 95 Gew.-% eines Polymers auf Basis von Milchsäure und 5 bis 25 Gew.-% Poly-ε-caprolacton besteht und einen Anteil an L-Milchsäure von 75 Gew.-% oder mehr aufweist, 0,1 bis 15 Gew.-Teile eines kristallinen anorganischen Pulvers, das 50 Gew.-% oder mehr an SiO₂ enthält, und 1 bis 20 Gew.-Teile eines Polyesters, der durch Kondensation eines aliphatischen mehrwertigen Alkohols mit einer aliphatischen mehrbasischen Säure oder mit einer aliphatischen mehrbasischen Säure und einer Hydroxycarbonsäure erhalten wurde.

11. Wärmebeständiger Formkörper aus einem Polymer auf Basis von Milchsäure, der Wärmebeständigkeit bei 100 bis 160°C aufweist und durch Verformen der Polymerzusammensetzung auf Basis von Milchsäure gemäß Anspruch 10 erhalten wurde.

## Revendications

1. Procédé pour la préparation d'un article moulé résistant à la chaleur d'un polymère à base d'acide lactique comprenant le mélange de 75-95% en poids d'un polymère à base d'acide lactique avec 5-25% en poids de poly-e-caprolactone afin d'obtenir un rapport d'acide L-lactique de 75% en poids ou supérieur, l'addition de 0,1-15 parties en poids d'une poudre inorganique cristalline comprenant 50% en poids ou plus de SiO₂ à 100 parties en poids dudit mélange polymère, le malaxage à l'état de fusion de la composition résultante, l'introduction de celle-ci dans un moule d'une machine de moulage à une température du moule de 85-125°C et le façonnage d'une forme tout en favorisant la cristallisation.

2. Procédé pour la préparation d'un article moulé résistant à la chaleur d'un polymère à base d'acide lactique comprenant le mélange de 100 parties en poids d'un polymère à base d'acide lactique présentant un rapport d'acide L-lactique de 75% en poids ou supérieur, de 0,1-15 parties en poids d'une poudre inorganique cristalline comprenant 50% en poids ou plus de SiO₂ et de 1-20 parties en poids d'un polyester, lequel est obtenu par condensation d'un alcool polyvalent aliphatique avec un acide polybasique aliphatique ou avec un acide polybasique aliphatique et un acide hydroxycarboxylique, le malaxage à l'état de fusion de la composition résultante, l'introduction de celle-ci dans un moule d'une machine de moulage à une température du moule de 85-125°C et le façonnage d'une forme tout en favorisant la cristallisation.

3. Procédé selon la revendication 1, dans lequel 1-20 parties en poids d'un polyester qui présente un poids moléculaire moyen en poids de 80 000-300 000, lequel est obtenu par condensation d'un alcool polyvalent aliphatique avec un acide polybasique aliphatique ou avec un acide polybasique aliphatique et un acide hydroxycarboxylique, sont mélangées avec 100 parties en poids du mélange du polymère à base d'acide lactique et de poly-ε-caprolactone.

4. Procédé selon la revendication 1, dans lequel 0,1-8 parties en poids d'un ester d'acide dibasique aliphatique, d'un ester d'alcool polyvalent ou d'hydroxypolycarboxylate de tributyle sont ajoutées à 100 parties en poids du mélange du polymère à base d'acide lactique et de poly-ε-caprolactone.

5. Procédé selon la revendication 2, dans lequel 0,1-8 parties en poids d'un ester d'acide dibasique aliphatique, d'un ester d'alcool polyvalent ou d'hydroxypolycarboxylate de tributyle sont ajoutées à 100 parties en poids du polymère à base d'acide lactique.

6. Procédé selon la revendication 3, dans lequel 0,1-8 parties en poids d'un ester d'acide dibasique aliphatique, d'un ester d'alcool polyvalent ou d'hydroxypolycarboxylate de tributyle sont ajoutées à 100 parties en poids du mélange du polymère à base d'acide lactique et de poly-ε-caprolactone.

7. Article moulé résistant à la chaleur d'un polymère à base d'acide lactique présentant une résistance à la chaleur de 100-160°C comprenant 100 parties en poids d'un mélange polymère constitué de 75-95% en poids d'un polymère à base d'acide lactique avec 5-25% en poids de poly-ε-caprolactone et présentant un rapport d'acide L-lactique de 75% en poids ou supérieur et 0,1-15 parties en poids d'une poudre inorganique cristalline comprenant 50% en poids ou plus de SiO₂.

8. Composition polymère à base d'acide lactique comprenant 100 parties en poids d'un polymère d'acide à base d'acide lactique présentant un rapport d'acide L-lactique de 75% en poids ou supérieur, 0,1-15 parties en poids d'une poudre inorganique cristalline comprenant 50% en poids ou plus de SiO₂ et 1-20 parties en poids d'un polyester, lequel est obtenu par condensation d'un alcool polyvalent aliphatique avec un acide polybasique aliphatique ou avec un acide polybasique aliphatique et un acide hydroxycarboxylique.

9. Article moulé résistant à la chaleur qui présente une résistance à la chaleur de 100-160°C et qui est obtenu par moulage de la composition polymère à base d'acide lactique de la revendication 8.

10. Composition polymère à base d'acide lactique comprenant 100 parties en poids d'un mélange polymère constitué de 75-95 % en poids d'un polymère à base d'acide lactique et de 5-25% en poids de poly-ε-caprolactone et présentant un rapport d'acide L-lactique de 75% en poids ou supérieur, 0,1-15 parties en poids d'une poudre inorganique cristalline comprenant 50% en poids ou plus de SiO₂ et 1-20 parties en poids d'un polyester, lequel est obtenu par condensation d'un alcool polyvalent aliphatique avec un acide polybasique aliphatique ou avec un acide polybasique aliphatique et un acide hydroxycarboxylique.

11. Article moulé résistant à la chaleur du polymère à base d'acide lactique qui présente une résistance à la chaleur de 100-160°C et qui est obtenu par moulage de la composition polymère à base d'acide lactique de la revendication 10.
